# EUROPÄISCHE PATENTSCHRIFT

(11) **EP 3 284 579 B1**
(45) Veröffentlichungstag und Bekanntmachung des Hinweises auf die Patenterteilung: **04.09.2019**
(21) Anmeldenummer: 17181985.7
(22) Anmeldetag: 18.07.2017
(51) Int. Cl.: B29C 49/64, B29C 49/42, B29C 49/06, B29C 49/36, B29C 49/12, B29K 23/00, B29K 67/00, B29L 31/00, B29K 623/00, B29K 667/00

(54) **HEIZVORRICHTUNG FÜR EINE BLASMASCHINE MIT FÖRDERKETTE FÜR EINEN ZWEIREIHIGEN TRANSPORT DER VORFORMLINGE**
HEATING DEVICE FOR A BLOWING MACHINE WITH CONVEYOR CHAIN FOR A DOUBLE ROW TRANSPORT OF PREFORMS
DISPOSITIF DE CHAUFFAGE POUR UNE SOUFFLEUSE COMPRENANT UN TRANSPORTEUR À CHAÎNE POUR UN TRANSPORT À DEUX RANGÉES DES PRÉFORMES

(30) Priorität: 27.07.2016 DE 102016113875
(43) Veröffentlichungstag der Anmeldung: 21.02.2018
(73) Patentinhaber: KHS Corpoplast GmbH, 22145 Hamburg (DE)
(72) Erfinder: Baumgarte, Rolf, 22926 Ahrensburg (DE); Lewin, Frank, 22889 Tangstedt (DE); Linke, Michael, 22159 Hamburg (DE); Firchau, Daniel, 23879 Mölln (DE); Ulutürk, Deniz, 22765 Hamburg (DE); CHOINSKI, Julian, 22359 Hamburg (DE)
(74) Vertreter: Meissner Bolte Partnerschaft mbB

(56) Entgegenhaltungen:
- DE-A1- 19 906 309
- FR-A1- 2 736 583
- US-A1- 2004 047 941
- US-A1- 2008 310 941
- US-A1- 2010 068 329
- US-A1- 2013 192 956

## Beschreibung

Die Erfindung betrifft eine Heizvorrichtung zur thermischen Konditionierung von für die Blasformung vorgesehenen Vorformlingen nach dem Oberbegriff des Anspruchs 1 und eine Blasmaschine nach dem Oberbegriff des Anspruchs 10.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine, also innerhalb einer Vorrichtung zur blasumformenden Herstellung von Fertigbehältern aus Vorformlingen, unterschiedlichen Bearbeitungsstationen zugeführt. Typischerweise weist eine derartige Blasformungsmaschine bzw. Blasmaschine eine Aufheizvorrichtung sowie eine Blaseinrichtung auf, in deren Bereich der zuvor in der Aufheizvorrichtung temperierte Vorformling durch biaxiale Orientierung zu einem Behälter expandiert wird. Die Expansion erfolgt z.B. mit Hilfe von Druckluft, die in den zu expandierenden Vorformling eingeleitet wird. Der verfahrenstechnische Ablauf bei einer derartigen Expansion des Vorformlings wird zum Beispiel in der Druckschrift DE 43 40 291 A1 erläutert.

Die Einleitung des unter Druck stehenden Gases umfasst auch die Druckgaseinleitung in die sich entwickelnde Behälterblase sowie die Druckgaseinleitung in den Vorformling zu Beginn des Blasumformvorganges bzw. Blasvorganges. Es sind auch andere Fluide zur Blasformung verwendbar, insbesondere auch die Verwendung des in den Behälter abzufüllenden Füllgutes. Die nachfolgende allgemeine Beschreibung erfolgt gleichwohl am Beispiel einer mit Druckgas arbeitenden Blasmaschine, ohne dass sich die Erfindung auf solche Blasmaschinen beschränkt.

Der grundsätzliche Aufbau einer Blasstation zur Behälterformung wird zum Beispiel in der Druckschrift DE 42 12 583 A1 beschrieben. Möglichkeiten zur Temperaturkonditionierung der Vorformlinge werden in der DE 23 52 926 A1 erläutert. Auf die genannten Schriften wird explizit Bezug genommen und insofern erübrigt sich eine weitere Beschreibung zu Blasstationen und zur Temperaturkonditionierung.

Innerhalb der Vorrichtung zur Blasformung können die Vorformlinge sowie die geblasenen Behälter mit Hilfe unterschiedlicher Transport- und Handhabungseinrichtungen transportiert werden. Bekannt ist z.B. die Verwendung von Transportdornen, an denen die Vorformlinge zum Transport gehaltert sind. Die Vorformlinge können aber auch mit anderen Trageinrichtungen gehandhabt und transportiert werden. Die Verwendung von Greifzangen zur Handhabung und zum Transport von Vorformlingen und die Verwendung von Klemmdornen, die zur Halterung in einen Mündungsbereich des Vorformlings einführbar sind, gehören ebenfalls zu den verfügbaren Konstruktionen.

Ein Transport und eine Handhabung von Behältern und Vorformlingen unter Verwendung von Übergaberädern wird beispielsweise in der DE 199 06 438 A1 bei einer Anordnung eines Übergaberades zwischen einem Blasrad und einer Ausgabestrecke und eines weiteren Übergaberades zwischen der Heizstrecke und dem Blasrad beschrieben.

Die bereits erläuterte Handhabung der Vorformlinge erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, nämlich auf einem sogenannten Blasrad, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Aufheizvorrichtung umlaufen. Bei einer stehenden Beheizung der Vorformlinge derart, dass die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen. Aus dem Stand der Technik sind sowohl aktive, steuerbare als auch passive Klemmelemente bekannt. Passive Klemmelemente bewirken z.B. eine Klemmung aufgrund einer einwirkenden Federkraft, gegen die die Vorformlinge auf die Transportdorne aufgesteckt werden oder gegen die die Vorformlinge vom Transportdorn abgenommen werden, während bei den aktiven Transportdornen eine Betätigung erfolgen muss, z.B. aktorisch oder z.B. durch eine externe Kurvensteuerung, die den Klemmmechanismus auslöst bzw. den Klemmeingriff wieder aufhebt.

Zur Verkürzung der erforderlichen Aufheizzeit ist es bekannt, im Bereich der Heizstrecke NIR-Strahler zu verwenden, deren Heizstrahlung in einem nahen Infrarotbereich emittiert wird, typischerweise mit Wellenlängen zwischen 0,4 und 1 Mikrometer. Die Aufheizung der Vorformlinge erfolgt dabei primär durch Strahlungsabsorption beim Durchgang der NIR-Strahlung durch das Vorformlingsmaterial. Zur Optimierung der Energieausbeute werden derartige Heizstrecken mit einer Vielzahl von Reflektionsflächen ausgestattet, um eine Absorption der Wärmestrahlung durch Bauteile der Heizstrecke möglichst zu vermeiden oder zumindest stark zu reduzieren, und um die NIR-Strahlung erneut zum Heizen auf den Vorformling zu reflektieren.

Typischerweise werden die Heizstrecken zumindest bereichsweise tunnelartig ausgebildet. Die Heizstrecken sind dazu zum Beispiel auf der einen Seite vom Gehäuse mit einer Halterung für die Heizelemente und auf der gegenüberliegenden Seite von einem diesem Gehäuse gegenüberliegenden Reflektor begrenzt; auch als Gegenreflektor bekannt. In vertikaler Richtung kann eine Begrenzung durch einen Boden und/oder einen Deckel erfolgen, je nachdem, ob die Vorformlinge mit ihren Mündungen in lotrechter Richtung nach oben oder nach unten orientiert durch die Heizstrecke hindurch transportiert werden. Auch diese vertikalen Begrenzungen können als Reflektoren ausgebildet werden. Es ist zudem üblich, den Mündungsbereich des Vorformlings zum Beispiel mittels mitlaufender Reflektoren, auch als Mündungsreflektoren bezeichnet, gegen erwärmende Strahlung zu schützen, da dieser Bereich bereits fertig ausgeprägt hergestellt ist und bei der Blasformung keine weitere Verformung erfahren soll.

Der Aufheizvorgang und die Ausbildung eines definierten Temperaturprofils ist ein wichtiger Prozessschritt zur Vorbereitung der Vorformlinge für die Blasumformung in Behälter. Anhand des beim Heizprozess in das Wandmaterial des Vorformlings eingeprägten Temperaturprofils bestimmen sich wesentliche Prozessparameter für die in der Blasstation durchgeführte biaxiale Ausdehnung des Vorformlings. Beispielsweise werden durch das Temperaturprofil die maximale Geschwindigkeit einer in den Vorformling eingeführten Reckstange und die maximale Expansionsgeschwindigkeit der Behälterblase bei der Druckbeaufschlagung des Vorformlings bestimmt. Höhere Geschwindigkeiten führen zu größeren Durchsatzraten und damit zur Effizienzsteigerung der Blasmaschine.

Ein hoher Durchsatz von Vorformlingen durch die Blasmaschine benötigt einen erhöhten Durchsatz von Vorformlingen beim Transport durch die vorgelagerte Aufheizvorrichtung. Damit steigt der für die Aufheizung der Vorformlinge benötigte Energiebedarf. Zum Aufheizen der Vorformlinge wird üblicherweise elektrische Energie in thermische Energie umgewandelt, die dann üblicherweise über Strahlung in die Vorformlinge eingetragen wird. Bei steigenden Durchsatzraten durch die Blasmaschine und durch die Aufheizvorrichtung steigt nicht nur die für den Aufheizprozess benötigte Energiemenge sondern auch die durch einzelne Prozessschritte bedingten Energieverluste. Verluste thermischer Energie entstehen beispielsweise durch Absorption von Wärmestrahlung an Bauteilen der Heizvorrichtung oder durch Strahlungsverluste an in der Heizvorrichtung technisch bedingten Öffnungen zur Umgebung. Aus wirtschaftlichen Gründen und zur Schonung vorhandener Ressourcen besteht die anhaltende Bestrebung, den Energieverluste möglichst gering zu halten.

Nennenswerte Wärmeverluste im Bereich der Aufheizvorrichtung entstehen insbesondere durch das Entweichen von Wärmestrahlung im Bereich der Heizstrecke durch Lücken zwischen den an Transportdornen getragenen Vorformlingen. Zur Lösung dieses Problems werden typischerweise Mündungsreflektoren in Form von Lochblenden verwenden, mit denen die Lücken teilweise geschlossen werden. Üblicherweise befindet sich der Mündungsbereich der Vorformlinge auf der Schattenseite der Lochblende und der Vorformlingskörper auf der Strahlungsseite der Lochblende. Der Vorformlingskörper wird beim Transport durch die Heizvorrichtung aufgeheizt und der Mündungsbereich wird durch die Lochblende vor Überhitzung geschützt. Die Vorformlinge können durch die Bohrung der Lochblenden hindurch aufgenommen und während des Transports entlang der Heizstrecke in einer in die Lochblende eingetauchten Position gehalten werden. Derartige Lösungen sind zum Beispiel aus DE 10 2010 064 545 A1 oder DE 10 2015 005 358 A1 bekannt.

Beim Transport der Vorformlinge durch eine Heizvorrichtung einer Blasmaschine ist besonderes Augenmerk darauf gelegt, das erforderliche Temperaturprofil bei einem hohen Wirkungsgrad der Heizelemente mit möglichst hohen Durchsatzraten zu erreichen. Zentrale Rolle spielt dabei die Ausgestaltung und die Funktionsweise des Transportsystems, das für die Hantierung und Halterung der Vorformlinge bei ihrer Führung entlang eines Transportweges durch die Heizvorrichtung verwendet wird. Die US2004/0047941A1, US2013/0192956A1, US2008/0310941A1, FR2736583A1, US2010/0068329A1, DE19906309A1 und US2487354A zeigen jeweils solche Transportsysteme.

Aufgabe der vorliegenden Erfindung ist die Bereitstellung einer Heizvorrichtung der eingangs genannten Art mit einem verbesserten Transportsystem das bei hohen Durchsatzraten ein energieeffizientes Aufheizen der Vorformlinge unterstützt.

Diese Aufgabe wird gelöst durch eine Heizvorrichtung mit den Merkmalen des Anspruchs 1. Vorteilhafte Ausgestaltungen sind in den Unteransprüchen angegeben.

Erfindungsgemäß ist eine Heizvorrichtung mit mindestens einer Heizstrecke zur thermischen Konditionierung von aus thermoplastischem Material bestehenden Vorformlingen auf ein für eine Blasumformung geeignetes Temperaturprofil, wobei die Heizvorrichtung eine Transporteinrichtung zum Transport der Vorformlinge entlang eines Transportweges der Heizvorrichtung aufweist, die eine umlaufende Förderkette mit mehreren drehgelenkig miteinander verbundenen Kettengliedern umfasst, und wobei die Transporteinrichtung Handhabungsmittel zur Halterung und Hantierung jeweils eines einzelnen Vorformlings aufweist, und wobei die Transporteinrichtung derart ausgebildet und eingerichtet ist, dass die Vorformlinge in mindestens einem ersten Abschnitt des Transportweges in einer einzigen Reihe geführt sind und in mindestens einem zweiten Abschnitt des Transportweges in zwei benachbarten Reihen geführt sind, und wobei jedes Kettenglied einen Ausleger aufweist an dem ein erstes Handhabungsmittel und ein zweites Handhabungsmittel angeordnet sind, und wobei der Ausleger einen Hauptarm und einen mit dem Hauptarm schwenkbar verbundenen Schwenkarm aufweist, und wobei ein Wechsel zwischen einem einreihigen Transport der Vorformlinge und einem zweireihigen Transport durch Schwenken des Schwenkarms ermöglicht ist.

Bei einem mehrreihigen Transport der Vorformlinge ist vorteilhaft, dass der zur Verfügung stehende Bauraum der Heizvorrichtung optimal genutzt werden kann. Im Vergleich zur herkömmlichen einreihigen Führung der Vorformlinge kann beim mehrreihigen Transport der radial zur Umlaufbahn der Transportstrecke innenliegende Raumbereich zur Führung einer weiteren Reihe von Vorformlingen genutzt werden, was einen kompakten Aufbau der Heizvorrichtung und eine geringe Längsausdehnung der Heizstrecken gestattet.

Eine Herausforderung ist beim mehrreihigen Transport, dass zur Hantierung von in mehreren Reihen geführten Vorformlingen insbesondere im Zuführ- oder Abgabebereich der Heizvorrichtung, in denen die Vorformlinge in die Transporteinrichtung aufgenommen bzw. daraus abgegeben werden, spezielle Aufnahme- oder Abgabeeinrichtungen nötig sind, die sowohl die auf außenliegenden als auch die auf innenliegenden Bahnen geführten Vorformlinge erreichen. Das erhöht die Komplexität und die Fehleranfälligkeit der eingesetzten Transport- und Handhabungseinrichtungen. Ein wichtiger Aspekt der Erfindung ist daher, dass die Vorformlinge während des Transports durch die Heizvorrichtung von einer mehrreihigen Führung in eine einreihige Führung überführt werden können.

Im Bereich der einreihigen Führung der Vorformlinge, also in einem ersten Abschnitt des Transportweges, können zur Übergabe von Vorformlingen in die Transporteinrichtung oder zu ihrer Entnahme aus der Transporteinrichtung Hantierungseinrichtungen seitlich in den Transportstrom der Vorformlinge eingreifen. Solche Hantierungseinrichtungen können zum Beispiel an Übergaberädern gelagerte Greifelemente sein.

Gegenüber einem zweireihigen Transport bietet der einreihige Transport zudem Vorteile, wenn entlang der Transportstrecke Inspektionseinrichtungen zur Inspektion der Vorformlinge vorgesehen sind. Ein die Vorformlinge seitlich erfassender Abtastbereich einer Inspektionsvorrichtung kann auf eine einzige Transportreihe eingerichtet sein. Zur Erfassung aller Vorformlinge braucht eine Inspektionsvorrichtung im einreihigen Transportbereich nur auf einer Seite des Transportstromes platziert werden.

Die Erfindung verbindet die Vorteile von einreihigem und mehrreihigem Transport, da eine Transition aus einem einreihigen in einen mehrreihigen Transport, bzw. umgekehrt vorgesehen ist.

In der einreihigen Führung werden die Vorformlinge in Transportrichtung hintereinander folgend im Transportstrom bewegt. In der mehrreihigen Führung, also bei der Führung in benachbarten Reihen in Transportrichtung hintereinander folgend, können die Vorformlinge in parallel, insbesondere zwei parallel verlaufenden Transportreihen geführt werden.

Ein mehrreihiger Transport der Vorformlinge ist insbesondere im Bereich einer Heizstrecke vorteilhaft, da die Vorformlinge in mehreren nebeneinander angeordneten Heizgassen geführt werden können. Diesbezüglich ist also daran gedacht, dass wenigstens eine der Heizstrecken in einem der zweiten Abschnitte angeordnet ist. Denkbar ist zudem, dass eine erste Heizstrecke mit mindestens zwei Heizgassen und eine zweite Heizstrecke mit genau einer Heizgasse in der Heizvorrichtung angeordnet sind. Diese Kombination von unterschiedlichen Heizstrecken ermöglicht eine besonders gute Einstellbarkeit der Temperaturkonditionierung der Vorformlinge.

Heizstrecken mit mehreren nebeneinander angeordneten Heizgassen können gegenüber Heizstrecken mit Einzelgasse in ihrer Längsausdehnung deutlich kürzer gebaut werden, da im Vergleich zu Heizstrecken mit Einzelgasse deutlich mehr Vorformlinge den Heizbereich einer mehrgassigen Heizstrecke durchlaufen. Der Wirkungsgrad der Heizstrecken und damit die Energieeffizienz kann dadurch deutlich verbessert werden.

In einer bevorzugten Ausgestaltung ist daran gedacht, dass die Heizstrecke mindestens eine Heizeinrichtung mit zwei in Transportrichtung der Vorformlinge parallel verlaufenden Heizgassen umfasst, wobei jede Heizgasse jeweils einer der beiden benachbarten Reihen von Vorformlingen zugeordnet ist, wobei die Heizeinrichtung Heizstrahler zur Temperaturkonditionierung der Vorformlinge aufweist, wobei die Heizstrahler insbesondere zwischen den beiden Heizgassen angeordnet sind.

Weiter bevorzugt ist daran gedacht, dass die Heizvorrichtung mindestens zwei entlang des Transportweges beabstandete Heizstrecken aufweist, und wobei insbesondere zwischen den beiden Heizstrecken einer der ersten Abschnitte des Transportweges ausgebildet ist.

Durch den Einsatz mindestens zweier entlang des Transportweges beanstandeter Heizstrecken kann die Temperaturkonditionierung der Vorformlinge bei hohen Durchsatzraten effizient und prozessflexibel gestaltet werden. In den Bereichen zwischen den Heizstrecken können sich zum Beispiel die Umlenkbereiche und/oder Übergabebereiche zur Aufnahme bzw. Abgabe der Vorformlinge befinden.

Es kann vorgesehen sein, dass die Heizvorrichtung einen ersten Übergabebereich zur Aufnahme von Vorformlingen an jeweils ein Handhabungsmittel sowie einen zweiten Übergabebereich zur Abgabe der Vorformlinge von den Handhabungsmitteln umfasst, wobei der erste Übergabebereich und/oder der zweite Übergabebereich in einem der ersten Abschnitte angeordnet ist. Die Übergabebereiche befinden sich somit vorzugsweise in dem ersten Abschnitt, also im einreihigen Führungsbereich. Die Aufnahme von Vorformlingen kann als der Anfang des Transportweges verstanden werden den ein Vorformling beim Durchlauf durch die Heizvorrichtung zurücklegt. Entsprechend kann die Abgabe der Vorformlinge als das Ende des Transportweges verstanden werden.

Bei einer einreihigen Führung der Vorformlinge im Bereich der Be- oder Entladung kann vorteilhaft eine geringe Transportdichte mit größeren Abständen zwischen den transportierten Vorformlingen genutzt werden, um die Transportvorrichtung mit Vorformlingen kollisionsfrei zu be- oder entladen.

Bezüglich der Anordnung der Handhabungsmittel kann beispielsweise vorgesehen sein, dass das erste und das zweite Handhabungsmittel an dem Schwenkarm gehaltert sind. Bei einer Verschwenkung des Schwenkarms um ein Drehgelenk am Hauptarm können die an den Handhabungsmitteln getragenen Vorformlinge in eine in Transportrichtung einreihige oder zweireihige Führung verschwenkt werden.

In einer bevorzugten Ausgestaltung ist daran gedacht, dass das erste Handhabungsmittel eines Auslegers an dem Hauptarm gehaltert ist und dass das zweite Handhabungsmittel beabstandet zur Drehachse des den Hauptarm und den Schwenkarm verbindenden Drehgelenkes an dem Schwenkarm gehaltert ist.

In einer Ausführungsform ist daran gedacht, dass die Hauptarme zwischen einer Geschlossenstellung in einem geradlinigen Führungsbereich der Kettenglieder und einer Spreizstellung in einem kurvenlinigen Führungsbereich der Kettenglieder verschwenkbar sind. Dabei kann vorgesehen sein, dass die Schwenkarme zwischen einer Auslenkstellung zur zweireihigen Führung der Vorformlinge und einer Einlenkstellung zur einreihigen Führung der Vorformlinge verschwenkbar sind. Bei der Bewegung des Auslegers ist daran gedacht, dass die Schwenkarme in die Auslenkstellung verschwenken, sobald die zugehörigen Hauptarme aus der Spreizstellung in die Geschlossenstellung verschwenken. Weiter ist daran gedacht, dass die Schwenkarme in die Einlenkstellung verschwenken, sobald die zugehörigen Hauptarme aus der Geschlossenstellung in die Spreizstellung verschwenken.

Die Ausleger können so angeordnet sein, dass die Hauptarme in der Geschlossenstellung eng aneinander anliegend bewegt werden. In der Spreizstellung entsteht ein Freiraum zwischen den Hauptarmen, in den der Schwenkarm zum Erreichen einer Einlenkstellung einschwenken kann. Die Hauptarme werden vorzugsweise in einem kurvenlinigen Führungsbereich der Kettenglieder in die Spreizstellung verschwenkt, den die Kettenglieder vorzugsweise im Umlenkbereich der Förderkette durchqueren.

Einige Konstruktionsdetails einer erfindungsgemäßen Heizvorrichtung insbesondere Details zum Aufbau erfindungsgemäßer Transport- und Handhabungsmittel können wie in DE 10 2015 005 358.2 und der DE 10 2014 017 546.4 ausgeführt sein. Diese Druckschriften werden dazu ausdrücklich in Bezug genommen.

Für eine besonders vorteilhafte Umsetzung der Schwenkmechanik des Auslegers, die einer vereinfachten Führung der Vorformlinge entgegenkommt, ist daran gedacht, dass das erste Handhabungsmittel koaxial zur Drehachse des den Hauptarm und den Schwenkarm verbindenden Drehgelenkes an dem Ausleger angeordnet ist.

Bevorzugt kann vorgesehen sein, dass die Handhabungsmittel jeweils einen quer zur Transportrichtung verschiebbar gelagerten Haltedorn umfassen, wobei der Haltedorn einen in einen Mündungsbereich eines Vorformlings eingreifenden Haltekopf umfasst. Ein in den Mündungsbereich eingreifender Haltekopf ermöglicht insbesondere einen hängenden Transport der Vorformlinge entlang des Transportweges.

Insbesondere zur Ausbildung eines homogenen bzw. eines speziell auf die Form des herzustellenden Behälters angepassten Temperaturprofils kann vorgesehen sein, dass die ersten und/oder die zweiten Handhabungsmittel jeweils ein Kopplungselement für die Drehung eines an dem Handhabungsmittel gehalterten Vorformlings aufweisen, wobei im Bereich wenigstens einer der Heizstrecken eine mit den Kopplungselementen zusammenwirkende Drehantriebsvorrichtung vorgesehen ist.

Das Kopplungselement kann beispielsweise ein Zahnkranz an einem Handhabungsmittel sein, der mit einer seitlich am Haltedorn angeordneten zum Beispiel als Zahnkette ausgebildeten Drehantriebsvorrichtung in Eingriff bringbar ist. Bei einer Relativbewegung zwischen der Zahnkette und dem Zahnkranz kann der Haltedorn in Drehung gebracht werden. Mit dem Drehantrieb können die Vorformlinge um ihre Längsachse gedreht werden, was eine gleichmäßige und allseitige Wärmeeinstrahlung mittels in den Heizstrecken seitlich zu den Vorformlingen angeordneten Heizelementen erzielt werden.

Zur Vereinfachung der Drehantriebkonstruktion kann vorgesehen sein, dass nur ein Handhabungsmittel eines Auslegers aktiv mit einer Drehantriebsvorrichtung angetrieben wird und die Drehbewegung auf ein weiteres Handhabungsmittel übertragen wird. Insbesondere ist dabei denkbar, dass das zweite bzw. das erste, das Kopplungselement aufweisende Handhabungsmittel mit dem ersten bzw. mit dem zweiten Handhabungsmittel eines Auslegers derart bewegungsgekoppelt ist, dass eine mittels der Drehantriebsvorrichtung erwirkte Drehung des zweiten bzw. des ersten Handhabungsmittels auf das erste bzw. das zweite Handhabungsmittel übertragen wird. Eine Übertragung der Drehbewegung ist zum Beispiel mittels eines die Handhabungsmittel drehverbindenden Riemens oder einer Kette möglich. Damit kann eine extern zur Förderkette angeordnete Drehantriebsvorrichtung auf einer Seite der Vorformlingsreihen angeordnet werden, die sowohl die innen als auch die außen geführten in Drehung bringt. Alternativ oder zusätzlich kann auf beiden Seiten der Vorformlingsreihen eine Drehantriebsvorrichtung vorgesehen sein.

Zur geführten Verschwenkung der Schwenkarme ist daran gedacht, dass die Transporteinrichtung Führungsmittel zur Zwangsführung der Schwenkarme umfasst.

Insbesondere kann vorgesehen sein, dass die Führungsmittel eine ortsfest im Bereich der Heizvorrichtung angeordnete Führungsschiene und an den Auslegern angeordnete, beim Umlauf der Kettenglieder mit der Führungsschiene zusammenwirkende Führungselemente umfassen. Führungselemente wie Führungsstifte oder Führungsrollen können an dem Ausleger, insbesondere an dem Schwenkarm angeordnet sein, die beim Umlauf der Förderkette mit der Führungsschiene in Anlage kommen und somit insbesondere den Schwenkarm in vorgegebene Bewegungsbahn zwingen. Ortsfest zur Förderkette angeordnete Führungsschienen können ausschließlich oder ergänzend dazu dienen, die Schwenkarme zwangsgeführt in eine Auslenkstellung für den zweireihigen Transport bzw. in eine Einlenkstellung für den einreihigen Transport der Vorformlinge zu bewegen.

Eine Führungsrolle zur Schwenkführung des Schwenkarms kann mit ihrer Drehachse insbesondere koaxial zum zweiten Handhabungsmittel, an dem Schwenkarm angeordnet sein. Diese Führungsrolle stützt sich beim Umlauf der Förderkette an der Führungsschiene ab, sodass der Schwenkarm am Überschreiten eines durch die Lage und den Verlauf der Führungsschiene bestimmten Schwenkwinkels gehindert ist.

In einer bevorzugten Ausgestaltung ist daran gedacht, dass die die Führungsmittel Koppelstangen umfassen, die jeweils ein an einem Hauptarm drehgelenkig gelagerten Schwenkarm drehgelenkig mit einem in Umlaufrichtung der Förderkette benachbarten Ausleger verbinden. Die Koppelstangen verbinden einen Schwenkarm vorzugsweise mit dem jeweils in Umlaufrichtung der Förderkette nacheilenden Ausleger, insbesondere mit dem nacheilenden Hauptarm. Zur Anlenkung der Koppelstange an den durch die Koppelstange verbundenen Elementen zweier Ausleger ist bevorzugt daran gedacht, dass einerseits die Drehachse der Koppelstange am Schwenkarm koaxial zur Drehachse des zweiten Handhabungsmittels angeordnet ist und andererseits die Drehachse der Koppelstange am benachbarten Ausleger koaxial zu Drehachse des ersten Handhabungsmittels angeordnet ist.

Derartige Koppelstangen sind vorzugsweise als zug- und/oder druckfeste Verbindungselemente zwischen dem Schwenkarm und einem benachbarten Ausleger vorgesehen, was die Übertragung von Zug- und/oder Druckkräften zwischen den mit der Koppelstange verbundenen Elementen zweier Ausleger ermöglicht und die mechanische Stabilität der Förderkette erhöht.

Zur Vorbeugung vor Fehlfunktionen der Förderkette zur Vermeidung extremer Drehlagerbelastungen kann vorgesehen sein, dass die Führungsmittel derart ausgebildet und eingerichtet sind, dass eine Übertotpunktlage der durch den Schwenkarm und die Koppelstange gebildeten Verbindung verhindert ist.

Insbesondere kann dabei vorgesehen sein, dass die Drehachse des den Schwenkarm und die Koppelstange verbindenden Drehgelenkes daran gehindert ist, die gedachte Verbindungslinie zwischen der Drehachse des den Hauptarm und den Schwenkarm verbindenden Drehgelenkes und der Drehachse des die Koppelstange und den benachbarten Hauptarm verbindenden Drehgelenkes zu überschwenken. In einer bevorzugten Auslenkstellung des Schwenkarmes, in der die Vorformlinge zweireihig transportiert werden, ist der Schwenkarm bezüglich des Förderkettenumlaufes nach außen verschwenkt. Die Sicherung gegen Erreichen der Übertotpunktlage verhindert somit insbesondere das Überschwenken der Verbindungslinie der Drehgelenke nach innen.

Die Verhinderung einer Übertotpunktlage ist insbesondere hilfreich beim Einsatz von Koppelstangen bei denen die Drehachse des die Koppelstange und den benachbarten Ausleger verbindenden Drehgelenkes koaxial zur Drehachse des Drehgelenkes zwischen dem Hauptarm und dem daran angelenkten Schwenkarm dieses Auslegers angeordnet ist. In solchen Fällen kann es beim Einschwenken des Schwenkarmes zum unbeabsichtigten Überschreiten der Totpunktlage kommen, was unter bestimmten Umständen zu hohen Lagerbelastungen und zu hohem Materialverschleiß führen kann.

Bei Verwendung von ortsfest angeordneten Führungsschienen ist insbesondere denkbar, dass eine oder mehrere Führungsschienen eine bezüglich des Umlaufs der Förderkette sowohl nach innen als auch nach außen gerichtete Führung der Schwenkarme erzwingen, was die Verwendung von Koppelstangen zwischen einem Schwenkarm und einem benachbarten Ausleger entbehrlich machen könnte. Solche Führungsschienen können auch statt oder ergänzend zum Einsatz von Koppelstangen verwendet werden. Ein ergänzender Einsatz von Führungsschienen kann zur Entlastung der Drehlager der verschwenkbaren Elemente der Ausleger dienlich sein.

Zur Steigerung der Energieeffizienz der Heizvorrichtung kann vorgesehen sein, dass die Transporteinrichtung Strahlungsblenden umfasst, die derart von der Förderkette getragen werden, dass sie zumindest in wenigstens einer der Heizstrecken, insbesondere einer Heizstrecke innerhalb eines zweiten Abschnitts des Transportweges, zwischen zwei Handhabungsmitteln zur Anordnung kommen.

In dieser Ausführungsform ist insbesondere daran gedacht, dass zumindest an einigen Schwenkarmen jeweils mindestens eine Strahlungsblende angeordnet ist, die beim zwei- oder mehrreihigen Transport der Vorformlinge den vertikalen Durchgang zwischen zwei in einer Reihe hintereinander transportierten Vorformlingen zumindest bereichsweise blockiert.

Insbesondere ist daran gedacht, dass die Strahlungsblenden unterhalb eines Mündungsabschnittes der Vorformlinge den vertikalen Durchgang zwischen zwei Handhabungsmitteln versperren, sodass eine unterhalb der Mündungsabschnitte auf die Vorformlinge einwirkende Wärmestrahlung vom Entweichen in Richtung des Mündungsabschnittes gehindert wird.

Konstruktionsdetails und Vorzüge derartiger als Strahlungsblenden ausgebildeten Mündungsreflektoren können auch aus der Druckschrift DE 10 2016 001 630 entnommen werden, die dafür ausdrücklich in Bezug genommen wird.

In einer denkbaren Ausführungsform kann vorgesehen sein, dass die Strahlungsblenden jeweils beweglich an den Schwenkarmen einer Förderkette gelagert sind. Insbesondere kann vorgesehen sein, dass die Strahlungsblenden drehbar an den Schwenkarmen gelagert sind, wobei die Drehachse der Strahlungsblenden vorzugsweise parallel zu der Schwenkachse der Schwenkarme verlaufen.

Eine bewegliche Lagerung der Strahlungsblenden an den Schwenkarmen einer Förderkette ermöglicht eine unabhängig von der Schwenkbewegung der Förderkette gesteuerte Bewegung der Strahlungsblende, was den kompakten Aufbau der Kettenglieder unterstützt. Die Strahlungsblende kann dadurch besonders nahe an die Vorformlinge herangeführt bzw. weit von den Vorformlingen entfernt werden, was in einer Geschlossenstellung eine besonders gute Abdeckung des Zwischenraumes zwischen den transportierten Vorformlingen ergibt und in der Offenstellung viel Raum für das kollisionsfreie Hantieren des Vorformlings lässt.

Alternativ kann vorgesehen sein, dass die Strahlungsblenden unbeweglich an den Schwenkarmen befestigt sind. Eine unbewegliche Anordnung der Strahlungsblenden kann robuster und weniger störungsanfällig als der mechanische Aufbau von beweglich angeordneten Strahlungsblenden ausgeführt sein.

Erfindungsgemäß ist auch eine Blasmaschine umfassend eine erfindungsgemäße Heizvorrichtung mit mindestens einer Heizstrecke zur thermischen Konditionierung von aus thermoplastischem Material bestehenden Vorformlingen auf ein für eine Blasumformung geeignetes Temperaturprofil sowie umfassend eine Blasumformvorrichtung zur biaxialen Blasumformung des Vorformlings in einen Behälter. Ausführungsformen, Details und Vorzüge der erfindungsgemäßen Blasmaschine ergeben sich unter anderem auch aus den Erläuterungen und Ausführungsbeispielen zur erfindungsgemäßen Heizvorrichtung.

Ausführungsbeispiele und Details der Erfindung werden im Folgenden mit Bezug auf die Figuren näher erläutert. Die Erfindung ist in den Figuren zum Teil stark schematisiert dargestellt. Es zeigen:
- Fig. 1: eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Vorformlingen zu Behältern mit angrenzender Heizvorrichtung zur Temperaturkonditionierung der Vorformlinge,
- Fig. 4: ein Teilbereich einer erfindungsgemäßen Förderkette in perspektivischer Ansicht,
- Fig. 5: ein Beispiel einer Streckenführungen für den Transport der Vorformlinge entlang eines Transportweges einer Heizvorrichtung,
- Fig. 6: ein Teilbereich einer erfindungsgemäßen Förderkette in einer Draufsicht, und
- Fig. 7: ein Teilbereich einer erfindungsgemäßen Förderkette in perspektivischer Ansicht mit an Handhabungsmitteln gehalterten Vorformlingen.

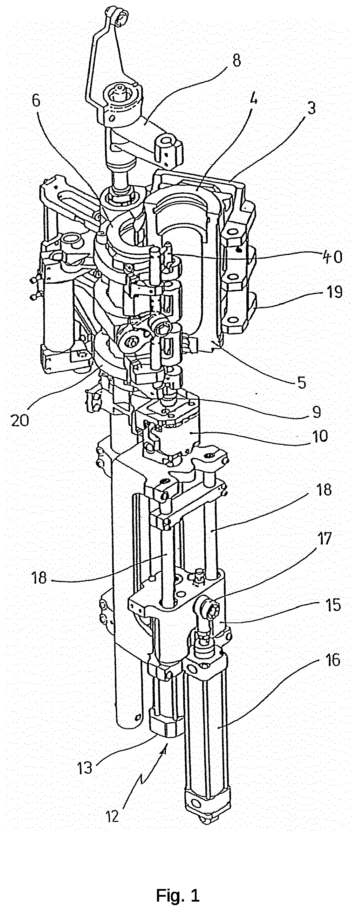

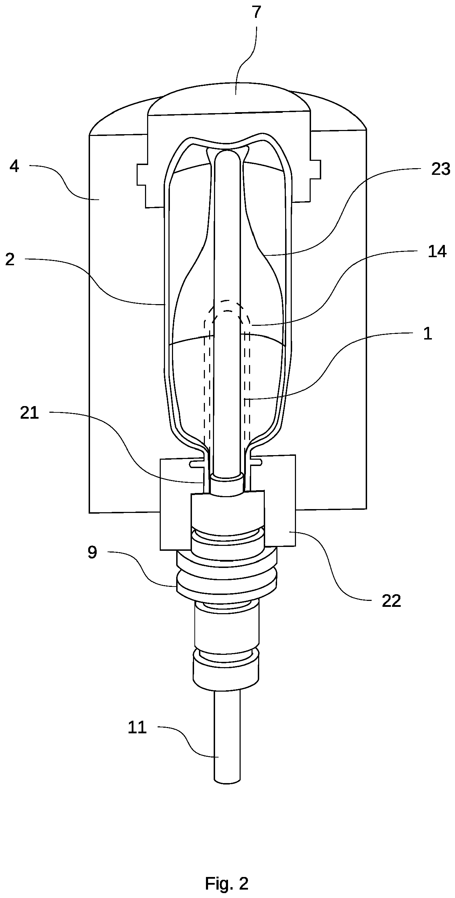

Der prinzipielle Aufbau einer Vorrichtung zur Umformung von Vorformlingen 1 in Behälter 2 ist in Fig. 1 und in Fig. 2 dargestellt. Die Anordnung kann dabei wie dargestellt oder in einer vertikalen Ebene um 180° gedreht erfolgen.

Die Vorrichtung zur Formung des Behälters 2 besteht im Wesentlichen aus einer Blasstation 3, die mit einer Blasform 4 versehen ist, in die ein Vorformling 1 einsetzbar ist. Der Vorformling 1 kann ein spritzgegossenes Teil aus Polyethylenterephthalat sein. Zur Ermöglichung eines Einsetzens des Vorformlings 1 in die Blasform 4 und zur Ermöglichung eines Herausnehmens des fertigen Behälters 2 besteht die Blasform 4 aus Formhälften 5, 6 und einem Bodenteil 7, das von einer Hubvorrichtung 8 positionierbar ist. Der Vorformling 1 kann im Bereich der Blasstation 3 von einem Halteelement 9 fixiert sein. Dieses Halteelement 9 kann z.B. erfindungsgemäß oder wie im Stand der Technik bekannt ausgebildet sein. Es ist beispielsweise möglich, den Vorformling 1 über Zangen oder andere Handhabungsmittel direkt in die Blasform 4 einzusetzen. Zur Ermöglichung einer Druckluftzuleitung ist unterhalb der Blasform 4 ein Anschlusskolben 10 angeordnet, der dem Vorformling 1 Druckluft zuführt und gleichzeitig eine Abdichtung vornimmt. Bei einer abgewandelten Konstruktion ist es grundsätzlich aber auch denkbar, feste Druckluftzuleitungen zu verwenden.

Eine Reckung des Vorformlings 1 erfolgt bei diesem Ausführungsbeispiel mit Hilfe einer Reckstange 11, die von einem Zylinder 12 positioniert wird. Gemäß einer anderen Ausführungsform wird eine mechanische Positionierung der Reckstange 11 über Kurvensegmente durchgeführt, die von Abgriffrollen beaufschlagt sind. Die Verwendung von Kurvensegmenten ist insbesondere dann zweckmäßig, wenn mehrere Blasstationen 3 auf einem rotierenden Blasrad 25 angeordnet sind.

Bei der in Fig. 1 dargestellten Ausführungsform ist das Recksystem derart ausgebildet, dass eine Tandemanordnung von zwei Zylindern 12 bereitgestellt ist. Von einem Primärzylinder 13 wird die Reckstange 11 zunächst vor Beginn des eigentlichen Reckvorganges bis in den Bereich eines Bodens 14 des Vorformlings 1 gefahren. Während des eigentlichen Reckvorganges wird der Primärzylinder 13 mit ausgefahrener Reckstange gemeinsam mit einem den Primärzylinder 13 tragenden Schlitten 15 von einem Sekundärzylinder 16 oder über eine Kurvensteuerung positioniert. Insbesondere ist daran gedacht, den Sekundärzylinder 16 derart kurvengesteuert einzusetzen, dass von einer Führungsrolle 17, die während der Durchführung des Reckvorganges an einer Kurvenbahn entlang gleitet, eine aktuelle Reckposition vorgegeben wird. Die Führungsrolle 17 wird vom Sekundärzylinder 16 gegen die Führungsbahn gedrückt. Der Schlitten 15 gleitet entlang von zwei Führungselementen 18.

Nach einem Schließen der im Bereich von Trägern 19, 20 angeordneten Formhälften 5, 6 erfolgt eine Verriegelung der Träger 19, 20 relativ zueinander mit Hilfe einer Verriegelungseinrichtung 40. Zur Anpassung an unterschiedliche Formen eines Mündungsabschnittes 21 des Vorformlings 1 ist gemäß Fig. 2 die Verwendung separater Gewindeeinsätze 22 im Bereich der Blasform 4 vorgesehen.

Fig. 2 zeigt zusätzlich zum geblasenen Behälter 2 auch gestrichelt eingezeichnet den Vorformling 1 und schematisch eine sich entwickelnde Behälterblase 23.

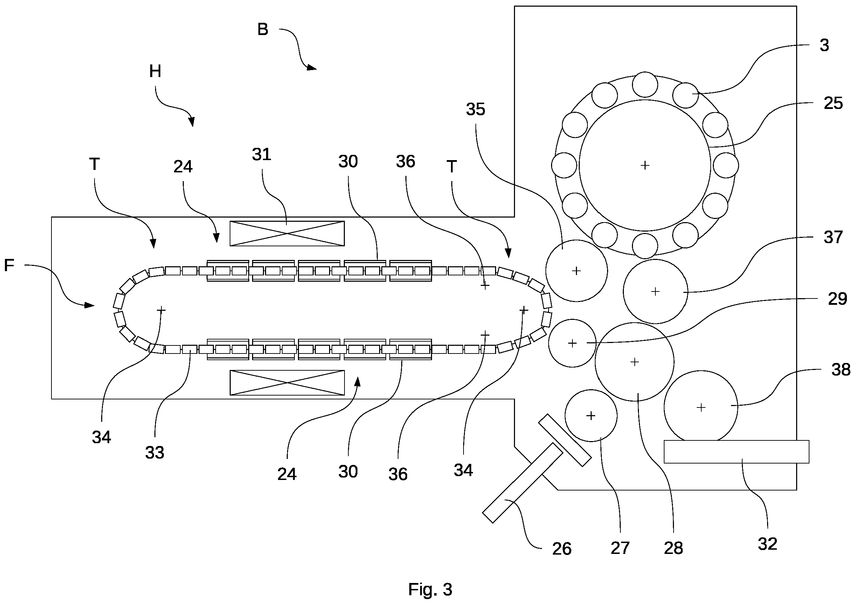

Fig. 3 zeigt den grundsätzlichen Aufbau einer Blasmaschine, die mit einer Heizstrecke 24 sowie einem rotierenden Blasrad 25 versehen ist. Ausgehend von einer Vorformlingseingabe 26 werden die Vorformlinge 1 von Übergaberädern 27, 28, 29 in den Bereich der Heizstrecke 24 transportiert. Entlang der Heizstrecke 24 sind Heizstrahler 30 als Heizeinrichtungen sowie Gebläse 31 angeordnet, um die Vorformlinge 1 zu temperieren. Nach einer ausreichenden Temperierung der Vorformlinge 1 werden diese von einem Übergaberad 35 an das Blasrad 25 übergeben, in dessen Bereich die Blasstationen 3 angeordnet sind. Die fertig geblasenen Behälter 2 werden von weiteren Übergaberädern 37, 28, 38 einer Ausgabestrecke 32 zugeführt. Das Übergaberad 37 ist dabei als ein Entnahmerad und das Übergaberad 38 als ein Ausgaberad ausgebildet.

Um einen Vorformling 1 derart in einen Behälter 2 umformen zu können, dass der Behälter 2 Materialeigenschaften aufweist, die eine lange Verwendungsfähigkeit von innerhalb des Behälters 2 abgefüllten Lebensmitteln, insbesondere von Getränken, gewährleisten, müssen spezielle Verfahrensschritte bei der Beheizung und Orientierung der Vorformlinge 1 eingehalten werden. Darüber hinaus können vorteilhafte Wirkungen durch Einhaltung spezieller Dimensionierungsvorschriften erzielt werden. Als thermoplastisches Material können unterschiedliche Kunststoffe verwendet werden. Einsatzfähig sind beispielsweise PET (Polyethylenterephthalat), PEN (Polyethylennaphthalat) oder PP (Polypropylen).

Die Expansion des Vorformlings 1 während des Orientierungsvorganges erfolgt durch Druckluftzuführung. Die Druckluftzuführung ist in eine Vorblasphase, in der Gas, zum Beispiel Pressluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, dass bei der dargestellten Ausführungsform die Heizstrecke 24 Teil des Transportweges der Vorformlinge 1 ist. Der Transport der Vorformlinge 1 erfolgt in der Aufheizvorrichtung H mittels einer Vielzahl umlaufender Transportelemente 33, die kettenartig aneinandergereiht und entlang von Umlenkrädern 34, 36 geführt sind. Die umlaufenden Transportelemente 33 bewegen sich also entlang einer Kettenbahn 55, die auch die Transportbahn der Vorformlinge bildet, da die Vorformlinge 1 entlang der Kettenbahn 55 geführt sind. Insbesondere ist daran gedacht, durch die kettenartige Anordnung der Transportelemente 33 eine im Wesentlichen rechteckförmige Grundkontur aufzuspannen. Bei der dargestellten Ausführungsform werden im Bereich der dem Übergaberad 27 zugewandten Ausdehnung der Heizstrecke 24 ein einzelnes relativ groß dimensioniertes Umlenkrad 34 und im Bereich von benachbarten Umlenkungen zwei vergleichsweise kleiner dimensionierte Umlenkräder 36 verwendet. Grundsätzlich sind aber auch beliebige andere Führungen denkbar.

Zur Ermöglichung einer möglichst dichten Anordnung des Übergaberades 27 und des Blasrades 25 relativ zueinander erweist sich die dargestellte Anordnung als besonders zweckmäßig, da im Bereich der entsprechenden Ausdehnung des Transportweges 55 drei Umlenkräder 34, 36 positioniert sind, und zwar jeweils die kleineren Umlenkräder 36 im Bereich der Überleitung zu den linearen Verläufen des Transportweges 55 und das größere Umlenkrad 34 im unmittelbaren Übergabebereich zum Übergaberad 27 und zum Blasrad 25. Alternativ zur Verwendung von kettenartigen Transportelementen 33 ist es beispielsweise auch möglich, ein rotierendes Heizrad zu verwenden.

Nach einem fertigen Blasen der Behälter 2 werden diese vom Übergaberad 38 aus dem Bereich der Blasstationen 3 herausgeführt und zur Ausgabestrecke 32 transportiert.

Ein Transport der Vorformlinge 1 und der Behälter 2 durch die Blasmaschine B kann in unterschiedlicher Art und Weise erfolgen. Gemäß einer Ausführungsvariante werden die Vorformlinge zumindest entlang des wesentlichen Teiles ihres Transportweges von Transportdornen getragen. Es ist aber auch möglich, einen Transport der Vorformlinge unter Verwendung von Zangen durchzuführen, die außenseitig am Vorformling angreifen, oder Innendorne zu verwenden, die in einen Mündungsbereich des Vorformlings eingeführt werden. Ebenfalls sind hinsichtlich der räumlichen Orientierung der Vorformlinge unterschiedliche Varianten denkbar.

Gemäß einer Variante wird der Vorformling im Bereich der Vorformlingseingabe 26 mit seiner Mündung in lotrechter Richtung nach oben orientiert zugeführt, anschließend gedreht, entlang der Heizstrecke 24 und des Blasrades 25 mit seiner Mündung in lotrechter Richtung nach unten orientiert gefördert und vor einem Erreichen der Ausgabestrecke 32 wieder gedreht. Gemäß einer anderen Variante wird der Vorformling 2 im Bereich der Heizstrecke 24 mit seiner Mündung in lotrechter Richtung nach unten orientiert beheizt, vor Erreichen des Blasrades 25 jedoch wieder um 180° gedreht.

Gemäß einer dritten Ausführungsvariante durchläuft der Vorformling den gesamten Bereich der Blasmaschine B ohne Durchführung von Wendevorgängen mit seiner Mündung in lotrechter Richtung nach oben orientiert.

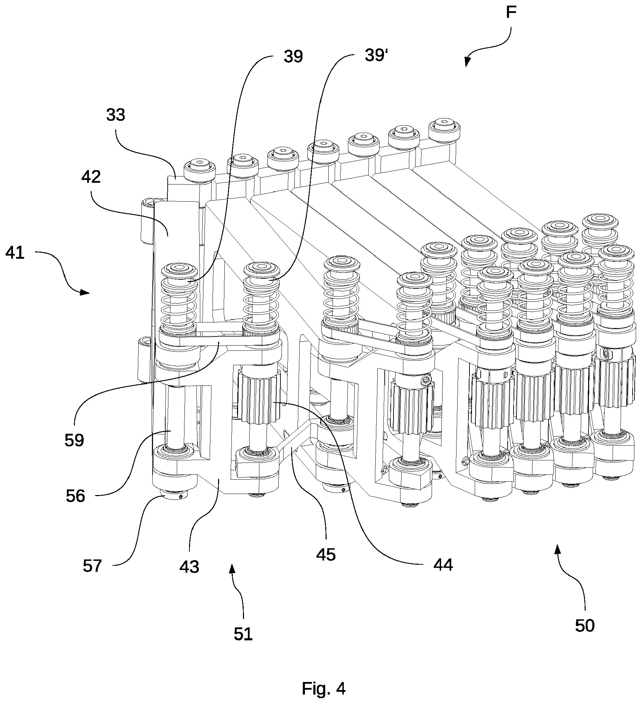

Die Fig. 4 zeigt in perspektivischer Darstellung einen Teil einer erfindungsgemäßen Förderkette F. Gezeigt sind mehrere als Kettenglieder ausgebildete Transportelemente 33, die an mit Tragdornen ausgestatteten Handhabungsmitteln 39, 39' Vorformlinge 1 tragen. Die Transportelemente 33 sind drehgelenkig miteinander verbunden.

Die Kettenglieder 33 tragen nach außen ragende Ausleger 41, die einen Hauptarm 42 und einen drehgelenkig am Hauptarm 42 angelenkten Schwenkarm 43 umfassen. Koaxial zur Drehachse des den Hauptarm 42 und den Schwenkarm 43 verbindenden Drehgelenkes ist ein erstes Handhabungsmittel 39 angeordnet. In einem Abstand zum ersten Handhabungsmittel 39 ist an dem Schwenkarm 43 ein zweites Handhabungsmittel 39' angeordnet. Wie in der Fig. 4 erkennbar, ist das zweite Handhabungsmittel 39' durch Schwenken des Schwenkarms 43 in seiner Winkelstellung zum Hauptarm 42 verstellbar. Wegen der koaxialen Anordnung des ersten Handhabungsmittels 39 zur Drehachse des den Hauptarm 42 und den Schwenkarm 43 verbindenden Drehgelenkes beschreibt der Verstellweg des zweiten Handhabungsmittels 39' beim Verschwenken des Schwenkarms 43 einen Kreisbogen um das erste Handhabungsmittel 39. Der Abstand zwischen dem ersten Handhabungsmittel 39 und dem zweiten Handhabungsmittel 39' eines Auslegers 41 bleibt damit in jeder Schwenkposition des Schwenkarms 43 gleich. Denkbar ist dagegen auch, dass das erste Handhabungsmittel 39 in einem Abstand zur Drehachse zwischen Hauptarm 42 und Schwenkarm 43 an dem Hauptarm 42 gehaltert ist, womit sich beim Verschwenken des Schwenkarms 43 sowohl die Winkelstellung als auch der Abstand des zweiten Handhabungsmittels 39' zum ersten Handhabungsmittels 39' verändern würde.

Fig. 4 zeigt die Förderkette F beim Übergang von einer geradlinigen Führung in eine kurvenlinigen Führung. Im geradlinigen Führungsbereich befinden sich die Ausleger 41 in einer Geschlossenstellung 50, in der die Hauptarme 42 benachbarter Ausleger 41 eng aneinander anliegend bewegt werden. Im kurvenlinigen Umlenkbereich sind die Ausleger 41 aus der Geschlossenstellung 50 in eine Spreizstellung 51 verschwenkt, in der die Hauptarme 42 benachbarter Ausleger 41 mit Abstand zueinander bewegt werden.

In der Geschlossenstellung 50 der Ausleger 41 sind die Handhabungsmittel 39, 39' und daran getragene Vorformlinge (nicht dargestellt) in Transportrichtung nebeneinander und damit zweireihig geführt. In der Spreizstellung 51 sind die Handhabungsmittel 39, 39' in Transportrichtung hintereinander und damit einreihig geführt.

Gemäß dem Ausführungsbeispiel aus Fig. 4 ist an dem zweiten Handhabungsmittel 39' ein Kopplungselement 44 angeordnet, mit dem das zweite Handhabungsmittel 39' in Zusammenwirkung mit einer Drehantriebsvorrichtung (nicht dargestellt) in Drehung um seine Längsachse versetzt werden kann. Das Kopplungselement 44 ist vorliegend als Zahnkranz ausgeführt, der zur Drehung des Handhabungsmittels 39' mit einer ortsfest im Bereich der Heizvorrichtung H angeordneten Zahnkette (nicht dargestellt) in Eingriff bringbar ist. Bei einer Relativbewegung zwischen der Zahnkette und dem Zahnkranz 44 kann das Handhabungsmittel 39' und ein daran getragener Vorformling 1 in Drehung versetzt werden.

In dem gezeigten Ausführungsbeispiel ist vorgesehen, dass im zweireihigen Führungsbereich nur das zweite, bezüglich der Umlaufbahn der Kettenglieder 33 außenliegende Handhabungsmittel 39' eines Auslegers aktiv mit einer Drehantriebsvorrichtung angetrieben wird und die Drehbewegung mittels einer Drehkopplung auf das innenliegende Handhabungsmittel 39 übertragen wird. Das zweite, das Kopplungselement 44 aufweisende Handhabungsmittel 39' ist dafür mittels eines Riemens 59 mit dem ersten Handhabungsmittel 39 eines Auslegers drehgekoppelt. Damit wird eine mittels der Drehantriebsvorrichtung erwirkte Drehung des zweiten Handhabungsmittels 39' auf das erste Handhabungsmittel 39 übertragen. Diese Anordnung ist auch derart umkehrbar, dass das innenliegende erste Handhabungsmittel 39 aktiv angetrieben wird und seine Drehbewegung mittels Drehkopplung auf das zweite außenliegende Handhabungsmittel 39' überträgt.

Die Fig. 4 zeigt des Weiteren eine Koppelstange 45, mit der ein Schwenkarm 43 eines ersten Auslegers 41 mit einem benachbarten Ausleger 41 drehgelenkig verbunden ist. Die Koppelstange 45 zwingt die Schwenkarme 43 bei einem Übergang von der Geschlossenstellung 50 in die Spreizstellung 51 der Ausleger 41 in eine Einlenkstellung 52. Beim Übergang von einer Spreizstellung 51 in die Geschlossenstellung 50 zwingt die Koppelstange 45 die Schwenkarme 43 in eine Auslenkstellung 53.

Bei einem Umlauf der Förderkette F werden die Ausleger 41 abwechselnd in die Geschlossenstellung 50 und in die Spreizstellung 51 geführt, und zwar wird die Spreizstellung 51 in den Umlenkbereichen der Förderkette F und die Geschlossenstellung 50 in den geradlinig geführten Bereichen der Förderkette F eingenommen. Dabei können zum Beispiel in Abhängigkeit des Antriebskonzeptes der Förderkette F abwechselnd Zug- und Druckkräfte auf die Koppelstange 45 wirken, die auf die Schwenkarme 43 bzw. die benachbarten Ausleger 41 übertragen werden.

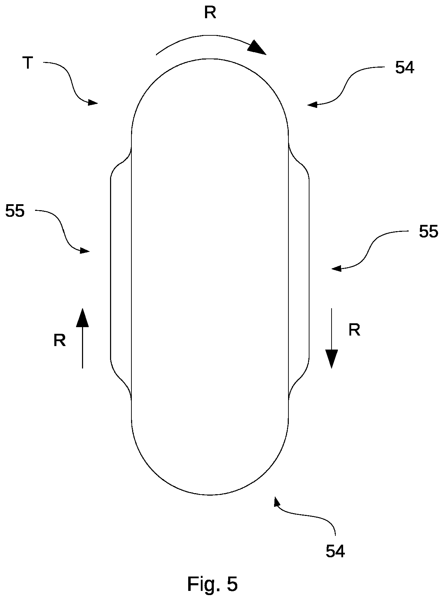

Fig. 5 zeigt schematisch eine Vorformlingsführung entlang eines Transportweges T einer Heizvorrichtung H die beim Umlauf einer erfindungsgemäßen Förderkette F entsteht. Die Transportrichtung ist mit Pfeilen R angedeutet. In den Bereichen 54 findet ein einreihiger Transport der Vorformlinge 1 statt und in den Bereichen 55 findet ein zweireihiger Transport der Vorformlinge 1 statt.

Durch den Wechsel zwischen der Geschlossenstellung 50 in den geradlinigen Streckenbereichen und der Spreizstellung 51 in den kurvenlinigen Streckenbereichen, wechselt die Vorformlingsführung entsprechend zwischen einem einreihigen Transport 54 in den Kurven und einem zweireihigen Transport 55 auf den Geraden.

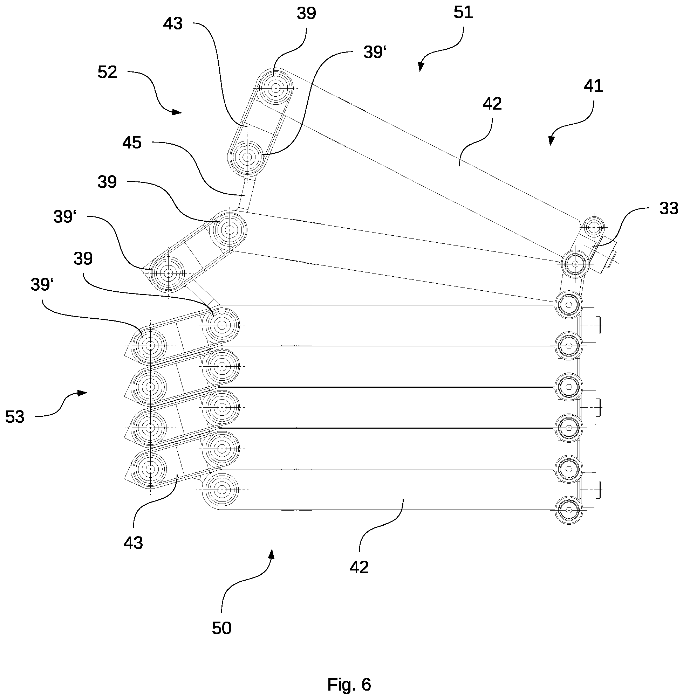

Fig. 6 zeigt den Teil der erfindungsgemäßen Förderkette F aus Fig. 4 in einer Draufsicht. Wie in dieser Figur deutlich zu erkennen, befindet sich der gezeigte Teil der Förderkette F in einem Übergang von einer geradlinigen Führung in eine Kurvenführung. In der Kurvenführung der Kettenglieder 33 befinden sich benachbarte Hauptarme 42 in einer Spreizstellung 51. In der geradlinigen Führung der Kettenglieder 33 befinden sich die benachbarten Hauptarme 42 in der Geschlossenstellung 50.

Die Schwenkarme 43 befinden sich in einer Auslenkstellung 53 während die Ausleger 41 in der Geschlossenstellung 50 bewegt werden und die Schwenkarme 43 befinden sich in einer Einlenkstellung 52, während die Ausleger 41 in der Spreizstellung 51 bewegt werden. Beim Übergang aus der Auslenkstellung 53 in die Einlenkstellung 52 werden die Schwenkarme 43 derart zu den Hauptarmen 42 verschwenkt, dass die Handhabungsmittel 39, 39' von einer zweireihigen Führung in eine einreihige Führung übergehen. Dadurch werden die an den Handhabungsmittel 39, 39' getragenen Vorformlinge 1 (nicht dargestellt) von einem einreihigen in einen zweireihigen Transport überführt. Analog dazu werden die Handhabungsmittel 39, 39' bei einem Übergang von der Spreizstellung 51 in die Geschlossenstellung 50 von einer einreihigen Führung in eine zweireihigen Führung überführt.

Bedingt durch den geschlossenen Umlauf der Förderkette F finden am Eingang und am Ausgang der Umlenkbereiche also beim Übergang zwischen gerader und kurvenliniger Streckenführung der Kettenglieder 33 abwechselnd Übergänge zwischen der Spreizstellung 51 und der Geschlossenstellung 50 der Ausleger 41 statt.

Wie sich aus Fig. 6 deutlich erkennen lässt, sind die Abstände zwischen im zweireihigen Transport hintereinander geführten Vorformlingen besonders klein, was verschiedene Vorteile bietet. Die geringen Abstände führen zum Beispiel dazu, dass möglichst wenig Strahlungsenergie, die beim Transport der Vorformlinge 1 im Bereich von Heizstrahlern 30 der Heizstrecke 24 auf den Körperbereich des Vorformlings 1 unterhalb seines Stützrings 49 einwirkt, durch große Lücken zwischen den Vorformlingen 1 in lotrechte Richtung nach oben hin entweicht.

Wie die Fig. 6 auch verdeutlicht, wird eine erste Transportreihe im zweireihigen Transportbereich von hintereinander geführten ersten Handhabungsmittel 39 und eine zweite Transportreihe von hintereinander geführten zweiten Handhabungsmittel 39' gebildet. Im einreihigen Transportbereich wechseln erste und zweite Handhabungsmittel 39 und 39' hintereinander ab.

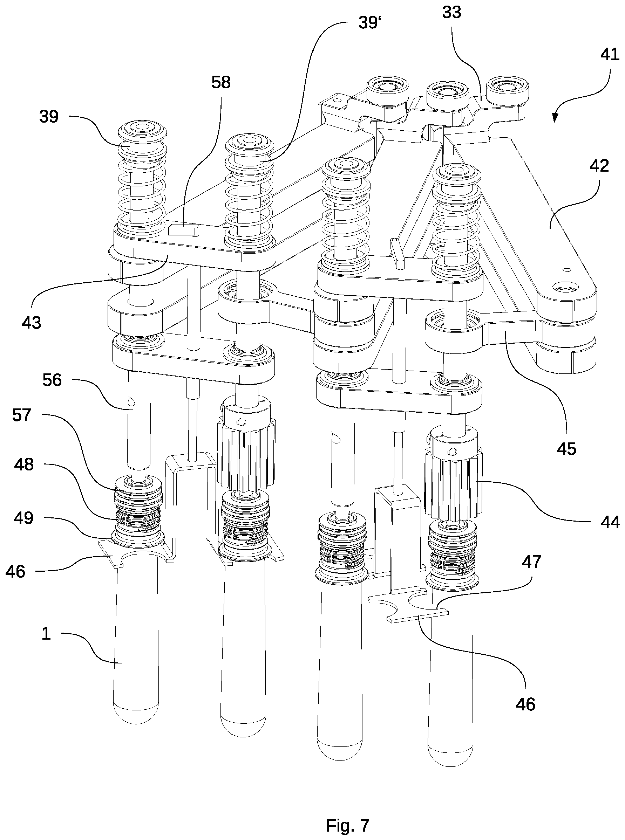

Fig. 7 zeigt ebenfalls einen Teilbereich einer erfindungsgemäßen Förderkette F in einer perspektivischen Ansicht. Der grundsätzliche Aufbau dieser Förderkette F gleicht dem Aufbau aus Fig. 4. Die Kettenglieder 33 befinden sich in dem gezeigten Teilbereich in einer kurvenlinigen Führung, womit sich die Ausleger 41 in der Spreizstellung 51 befinden. Die Schwenkarme 43 befinden sich in der Einlenkstellung 52, in der die Handhabungsmittel 39 und 39' einreihig geführt werden. Die an dem in lotrechter Richtung unteren Ende der Handhabungsmittel 39, 39' getragenen Vorformlinge 1 werden entsprechend der Schwenkstellung der Schwenkarme 43 vorliegend einreihig hintereinander transportiert.

Wie auch in dem Ausführungsbeispiel nach Fig. 4 ist an den zweiten Handhabungsmitteln 39' jeweils ein Kopplungselement 44 angeordnet, mit denen die Vorformlinge 1 in Drehung um ihre Längsachse versetzt werden können. Die auch hier angedachte Drehübertragung auf das erste Handhabungsmittel 39 mittels Riemen ist in dieser Figur nicht gezeigt.

Die Fig. 7 verdeutlicht des Weiteren den üblichen Aufbau der Handhabungsmittel 39, 39' mit einem vertikal verschiebbar gelagerten Haltedorn 56, der an seinem in lotrechter Richtung unteren Ende einen Haltekopf 57 zur Halterung eines Vorformlings 1 aufweist.

In Fig. 7 ist des Weiteren gezeigt, dass Strahlungsblenden 46 vorgesehen sein können, die die Vorformlinge 1 unterhalb eines sich dem Mündungsbereich 48 nach unten hin anschließenden Stützrings 49 bereichsweise umgreifen.

Die Strahlungsblenden können drehbar an den Schwenkarmen 43 gelagert sein, so dass die Strahlungsblenden seitlich von den Vorformlingen 1 entfernt werden können. Die Drehstellung der Strahlungsblenden 46 kann beispielsweise mittels Betätigung eines an der Drehwelle der Strahlungsblenden 46 drehfest angeordneten Blendenhebels 58 erfolgen. Die Blendenhebel 58 beispielsweise von einer ortsfest an der Heizvorrichtung H angeordneten Führungsschiene (nicht dargestellt) geführt werden. Dadurch können die, in der Geschlossenstellung der Ausleger 41 den vertikalen Durchgang zwischen zwei in einer Reihe hintereinander folgend transportierten Vorformlingen 1 versperrenden Strahlungsblenden 41 beim Übergang der Schwenkarme 43 aus der Auslenkstellung 53 in die Einlenkstellung kollisionsfrei von den Vorformlingen 1 außer Umgriff gedreht werden.

Wie gezeigt, können die Strahlungsblenden 46 plattenartig ausgebildet sein und jeweils zwei an gegenüberliegenden Kanten, konkav in das Material der Strahlungsblende 46 eingearbeitete Rezesse 47 aufweisen. Im zweireihigen Transportbereich der Vorformlinge 1 werden zwei Strahlungsblenden 46 zweier Schwenkarme 43 so zusammengeführt, dass sich die Rezesse 47 dieser zwei zusammengeführten Strahlungsblenden 41 gegenüberliegen und zusammen einen etwa kreisförmigen Ausschnitt bilden, der einen Durchlass für den Korpus eines Vorformlings 1 freilässt.

Die Rezesse 47 der Strahlungsblenden 46 umgreifen den Vorformling 1 vorzugsweise unterhalb seines Stützrings 49 jeweils bereichsweise in einem Winkelbereich von zum Beispiel 180°. Vorzugsweise sind die Rezesse 47 derart ausgebildet, dass die Strahlungsblenden 46 den Stützring 49 in Längsrichtung des Vorformlings 1 gesehen überlappen. Damit werden die Zwischenräume zwischen den Vorformlingen 1 besonders gut geschlossen. Außerdem kann damit auch ein ungewolltes Aufheizen der Stützringe 49 und der darüber anschließenden Mündungsabschnitt 48 beim Transport durch die Heizstrecke 24 verringert werden.

**Bezugszeichenliste**

| | | | |
|---|---|---|---|
| 1 | Vorformling | 34 | Umlenkrad |
| 2 | Behälter | 35 | Übergaberad |
| 3 | Blasstation | 36 | Umlenkrad |
| 4 | Blasform | 37 | Übergaberad |
| 5 | erste Formhälfte | 38 | Übergaberad |
| 6 | zweite Formhälfte | 39 | Erstes Handhabungsmittel |
| 7 | Bodenteil | 39 | Zweites Handhabungsmittel |
| 8 | Hubvorrichtung | 40 | Verriegelungseinrichtung |
| 9 | Halteelement | 41 | Ausleger |
| 10 | Anschlusskolben | 42 | Hauptarm |
| 11 | Reckstange | 43 | Schwenkarm |
| 12 | Zylinder | 44 | Kopplungselement |
| 13 | Primärzylinder | 45 | Koppelstange |
| 14 | Boden | 46 | Strahlungsblende |
| 15 | Schlitten | 47 | Rezess der Strahlungsblende |
| 16 | Sekundärzylinder | 48 | Mündungsabschnitt |
| 17 | Führungsrolle | 49 | Stützring |
| 18 | Führungselement | 50 | Geschlossenstellung |
| 19 | erster Träger | 51 | Spreizstellung |
| 20 | zweiter Träger | 52 | Einlenkstellung |
| 21 | Mündungsabschnitt | 53 | Auslenkstellung |
| 22 | Gewindeeinsatz | 54 | Einreihiger Transportbereich |
| 23 | Behälterblase | 55 | Zweireihiger Transportbereich |
| 24 | Heizstrecke | 56 | Haltedorn |
| 25 | Blasrad | 57 | Haltekopf |
| 26 | Vorformlingseingabe | 58 | Blendenhebel |
| 27 | Übergaberad | 59 | Riemen |
| 28 | Übergaberad | | |
| 29 | Übergaberad | B | Blasstation |
| 30 | Heizstrahler | H | Heizvorrichtung |
| 31 | Gebläse | T | Transportweg |
| 32 | Ausgabestrecke | F | Förderkette |
| 33 | Transportmittel | R | Transportrichtung |

## Patentansprüche

1. Heizvorrichtung (H) mit mindestens einer Heizstrecke (24) zur thermischen Konditionierung von aus thermoplastischem Material bestehenden Vorformlingen (1) auf ein für eine Blasumformung geeignetes Temperaturprofil, wobei die Heizvorrichtung (H) eine Transporteinrichtung zum Transport der Vorformlinge (1) entlang eines Transportweges (T) der Heizvorrichtung (H) aufweist, die eine umlaufende Förderkette (F) mit mehreren drehgelenkig miteinander verbundenen Kettengliedern (33) umfasst, und wobei die Transporteinrichtung Handhabungsmittel (39) zur Halterung und Hantierung jeweils eines einzelnen Vorformlings (1) aufweist, **wobei** die Transporteinrichtung derart ausgebildet und eingerichtet ist, dass die Vorformlinge (1) in mindestens einem ersten Abschnitt des Transportweges (T) in einer einzigen Reihe geführt sind und in mindestens einem zweiten Abschnitt des Transportweges (T) in zwei benachbarten Reihen geführt sind, **dadurch gekennzeichnet, dass** jedes Kettenglied (33) einen Ausleger (41) aufweist an dem ein erstes Handhabungsmittel (39) und ein zweites Handhabungsmittel (39') angeordnet sind, und wobei der Ausleger (41) einen Hauptarm (42) und einen mit dem Hauptarm (42) schwenkbar verbundenen Schwenkarm (43) aufweist, und wobei ein Wechsel zwischen einem einreihigen Transport der Vorformlinge (1) und einem zweireihigen Transport durch Schwenken des Schwenkarms (43) ermöglicht ist.

2. Heizvorrichtung (H) nach Anspruch 1, **dadurch gekennzeichnet, dass** das erste Handhabungsmittel (39) koaxial zur Drehachse des den Hauptarm (42) und den Schwenkarm (43) verbindenden Drehgelenkes an dem Ausleger (41) angeordnet ist.

3. Heizvorrichtung (H) nach einem der vorangegangenen Ansprüche, **dadurch gekennzeichnet, dass** die ersten und/oder die zweiten Handhabungsmittel (39, 39') jeweils ein Kopplungselement (44) für die Drehung eines an dem Handhabungsmittel (39, 39') gehalterten Vorformlings (1) aufweisen, wobei im Bereich wenigstens einer der Heizstrecken (24) eine mit den Kopplungselementen (44) zusammenwirkende Drehantriebsvorrichtung vorgesehen ist.

4. Heizvorrichtung (H) nach Anspruch 3, **dadurch gekennzeichnet, dass** das zweite bzw. das erste, das Kopplungselement (44) aufweisende Handhabungsmittel (39, 39') mit dem ersten bzw. mit dem zweiten Handhabungsmittel (39, 39') eines Auslegers (41) derart bewegungsgekoppelt ist, dass eine mittels der Drehantriebsvorrichtung erwirkte Drehung des zweiten bzw. des ersten Handhabungsmittels (39, 39') auf das erste bzw. das zweite Handhabungsmittel (39, 39') übertragen wird.

5. Heizvorrichtung (H) nach einem der vorangegangenen Ansprüche, **dadurch gekennzeichnet, dass** die Transporteinrichtung Führungsmittel zur Zwangsführung der Schwenkarme (43) umfasst.

6. Heizvorrichtung (H) nach Anspruch 5, **dadurch gekennzeichnet, dass** die Führungsmittel eine ortsfest im Bereich der Heizvorrichtung (H) angeordnete Führungsschiene und an den Auslegern (41) angeordnete, beim Umlauf der Kettenglieder (33) mit der Führungsschiene zusammenwirkende Führungselemente umfassen.

7. Heizvorrichtung (H) nach einem der Ansprüche 5 oder 6, **dadurch gekennzeichnet, dass** die die Führungsmittel Koppelstangen (45) umfassen, die jeweils ein an einem Hauptarm (42) drehgelenkig gelagerten Schwenkarm (43) drehgelenkig mit einem in Umlaufrichtung der Förderkette (F) benachbarten Ausleger (41) verbinden.

8. Heizvorrichtung (H) nach Anspruch 7, **dadurch gekennzeichnet, dass** die Führungsmittel derart ausgebildet und eingerichtet sind, dass eine Übertotpunktlage der durch den Schwenkarm (43) und die Koppelstange (45) gebildete Verbindung verhindert ist.

9. Heizvorrichtung (H) nach einem der vorangegangenen Ansprüche, **dadurch gekennzeichnet, dass** die Transporteinrichtung Strahlungsblenden (46) umfasst, die derart von der Förderkette (F) getragen werden, dass sie zumindest in wenigstens einer der Heizstrecken (24), insbesondere einer Heizstrecke (24) innerhalb eines zweiten Abschnitts des Transportweges (T), zwischen zwei Handhabungsmitteln (39, 39') zur Anordnung kommen.

10. Blasmaschine umfassend eine Heizvorrichtung (H) gemäß einem der Ansprüche 1 bis 9 mit mindestens einer Heizstrecke (24) zur thermischen Konditionierung von aus thermoplastischem Material bestehenden Vorformlingen (1) auf ein für eine Blasumformung geeignetes Temperaturprofil sowie umfassend eine Blasumformvorrichtung (3) zur biaxialen Blasumformung des Vorformlings (1) in einen Behälter (2).

## Claims

1. A heating device (H) comprising at least one heating section (24) for thermally conditioning preforms (1) consisting of thermoplastic material to a temperature profile suitable for a blow moulding, wherein the heating device (H) has a transport unit for transporting the preforms (1) along a transport path (T) of the heating device (H), the transport unit comprising a revolving conveyor chain (F) comprising a plurality of pivotably interconnected chain links (33), and wherein the transport unit has handling means (39) for holding and handling an individual preform (1) each, **wherein** the transport unit is configured and equipped such that the preforms (1) are guided in a single row in at least a first section of the transport path (T) and are guided in two adjacent rows in at least a second section of the transport path (T), **characterised in that** each chain link (33) has a cantilever (41), on which a first handling means (39) and a second handling means (39') are arranged, and wherein the cantilever (41) has a main arm (42) and a pivot arm (43), which is pivotably connected to the main arm (42), and wherein a change between a transport of the preforms (1) in one row and a transport in two rows is made possible by pivoting the pivot arm (43).

2. The heating device (H) according to claim 1, **characterised in that** the first handling means (39) is arranged on the cantilever (41) coaxially to the axis of rotation of the pivot joint, which connects the main arm (42) and the pivot arm (43).

3. The heating device (H) according to any one of the preceding claims, **characterised in that** the first and/or the second handling means (39, 39') each have a coupling element (44) for the rotation of a preform (1), which is held on the handling means (39, 39'), wherein a rotary drive device, which cooperates with the coupling elements (44), is provided in the area of at least one of the heating sections (24).

4. The heating device (H) according to claim 3, **characterised in that** the second or the first handling means (39, 39'), respectively, which has the coupling element (44), is moveably coupled to the first or to the second handling means (39, 39'), respectively, of a cantilever (41) such that a rotation of the second or of the first handling means (39, 39'), respectively, effected by means of the rotary drive device is transferred to the first or the second handling means (39, 39'), respectively.

5. The heating device (H) according to any one of the preceding claims, **characterised in that** the transport unit comprises guide means for the positive guidance of the pivot arms (43).

6. The heating device (H) according to claim 5, **characterised in that** the guide means comprise a guide rail, which is arranged in the area of the heating device (H) in a stationary manner, and guide elements, which are arranged on the cantilevers (41) and which cooperate with the guide rail in response to the revolution of the chain links (33).

7. The heating device (H) according to any one of claims 5 or 6, **characterised in that** the guide means comprise coupling rods (45), which each pivotably connect a pivot arm (43) pivotably mounted to a main arm (42) to a cantilever (41), which is adjacent in the direction of revolution of the conveyor chain (F).

8. The heating device (H) according to claim 7, **characterised in that** the guide means are configured and equipped such that an over dead centre position of the connection formed by the pivot arm (43) and the coupling rod (45) is prevented.

9. The heating device (H) according to any one of the preceding claims, **characterised in that** the transport unit comprises radiation screens (46), which are supported by the conveyor chain (F) such that they are brought into position between two handling means (39, 39') at least in at least one of the heating sections (24), in particular a heating section (24) within a second section of the transport path (T).

10. A blow moulding machine comprising a heating device (H) according to any one of claims 1 to 9 comprising at least one heating section (24) for thermally conditioning preforms (1) consisting of thermoplastic material to a temperature profile suitable for a blow moulding, as well as comprising a blow moulding device (3) for biaxially blow moulding the preform (1) into a container (2).

## Revendications

1. Dispositif de chauffage (H) avec au moins une section de chauffage (24) pour le conditionnement thermique de préformes (1) en matériau thermoplastique de sorte à obtenir un profil de températures approprié au moulage par soufflage, le dispositif de chauffage (H) présentant un dispositif de transport pour le transport des préformes (1) le long d'un parcours (T) du dispositif de chauffage (H), lequel dispositif de transport comprend une chaîne de transport (F) circulante avec plusieurs chaînons (33) reliés entre eux par une articulation tournante, le dispositif de transport présentant des moyens de manipulation (39) respectivement destinés à maintenir et manipuler une préforme (1) individuelle, le dispositif de transport étant façonné et aménagé de façon à ce que les préformes (1) soient, sur au moins une première section du parcours (T), transportées sur une rangée unique et, sur au moins une seconde section du parcours (T), transportées sur deux rangées voisines, **caractérisé en ce que** chaque chaînon (33) présente un bras (41) sur lequel sont agencés un premier moyen de manipulation (39) et un second moyen de manipulation (39'), le bras (41) présentant un bras principal (42) et un bras pivotant (43) relié au bras principal (42) de façon à pouvoir pivoter, et le pivotement du bras pivotant (43) permettant de passer d'un transport des préformes (1) sur une rangée à un transport sur deux rangées.

2. Dispositif de chauffage (H) selon la revendication 1, **caractérisé en ce que** le premier moyen de manipulation (39) est disposé coaxialement par rapport à l'axe de rotation de l'articulation pivotante reliant le bras principal (42) et le bras pivotant (43) du bras (41).

3. Dispositif de chauffage (H) selon l'une des revendications précédentes, **caractérisé en ce que** les premiers et/ou seconds moyens de manipulation (39, 39') présentent respectivement un élément d'accouplement (44) pour la rotation d'une préforme (1) maintenue par le moyen de manipulation (39, 39'), un dispositif d'entraînement en rotation agissant conjointement avec les éléments d'accouplement (44) étant prévu dans la zone d'au moins l'une des sections de chauffage (24).

4. Dispositif de chauffage (H) selon la revendication 3, **caractérisé en ce que** le second ou le premier moyen de manipulation (39, 39') présentant l'élément d'accouplement (44) est couplé au premier ou au second moyen de manipulation (39, 39') d'un bras (41) par un couplage cinématique de façon à transmettre au premier ou au second moyen de manipulation (39, 39') une rotation du second ou du premier moyen de manipulation (39, 39') obtenue au moyen du dispositif d'entraînement en rotation.

5. Dispositif de chauffage (H) selon l'une des revendications précédentes, **caractérisé en ce que** le dispositif de transport comprend des moyens de guidage assurant le guidage forcé des bras pivotants (43).

6. Dispositif de chauffage (H) selon la revendication 5, **caractérisé en ce que** les moyens de guidage comprennent un rail de guidage stationnaire agencé dans la zone du dispositif de chauffage (H) et des éléments de guidage agencés aux bras (41) et agissant conjointement avec le rail de guidage lors de la rotation des chaînons (33).

7. Dispositif de chauffage (H) selon l'une des revendications 5 ou 6, **caractérisé en ce que** les moyens de guidage comprennent des barres de couplage (45) lesquelles, par une articulation tournante, relient respectivement un bras pivotant (43) relié au bras principal (42) par une articulation tournante à un bras (41) voisin dans le sens de rotation de la chaîne de transport (F).

8. Dispositif de chauffage (H) selon la revendication 7, **caractérisé en ce que** les moyens de guidage sont conçus et agencés de façon à empêcher un dépassement du point de basculement de l'ensemble formé par le bras pivotant (43) et la barre de couplage (45).

9. Dispositif de chauffage (H) selon l'une des revendications précédentes, **caractérisé en ce que** le dispositif de transport comporte des écrans thermiques (46) qui, dans au moins dans l'une au moins des sections de chauffage (24), notamment dans une section de chauffage (24) à l'intérieur d'une seconde section du parcours (T), sont supportés par la chaîne de transport (F) de façon à venir se placer entre deux moyens de manutention (39, 39').

10. Machine de moulage par soufflage comprenant un dispositif de chauffage (H) selon l'une des revendications 1 à 9 avec au moins une section de chauffage (24) pour le conditionnement thermique de préformes (1) en matériau thermoplastique de sorte à obtenir un profil de températures approprié au moulage par soufflage, et comprenant un dispositif de moulage (3) par soufflage pour la transformation biaxiale par soufflage de la préforme (1) en un récipient (2).
